Europäisches Patentamt

European Patent Office

Office européen des brevets

(19)

(11) Numéro de publication: **0 144 253**
**B1**

(12) **FASCICULE DE BREVET EUROPEEN**

(45) Date de publication du fascicule du brevet:
**22.06.88**

(51) Int. Cl.⁴: **G 01 F 23/24**

(21) Numéro de dépôt: **84401907.5**

(22) Date de dépôt: **25.09.84**

(54) Système thermique de mesure de niveau de liquide.

(30) Priorité: **29.09.83 FR 8315562**

(43) Date de publication de la demande:
**12.06.85 Bulletin 85/24**

(45) Mention de la délivrance du brevet:
**22.06.88 Bulletin 88/25**

(84) Etats contractants désignés:
**BE CH DE FR GB LI SE**

(56) Documents cités:
**FR - A - 2 219 402**
**FR - A - 2 367 276**
**FR - A - 2 401 406**
**US - A - 3 644 885**
**US - A - 3 955 416**
**US - A - 3 956 760**

(73) Titulaire: **COMMISSARIAT A L'ENERGIE ATOMIQUE,
31/33, rue de la Fédération, F-75015 Paris (FR)**
Titulaire: **FRAMATOME, Tour Fiat 1 place de la Coupole,
F-92400 Courbevoie (FR)**

(72) Inventeur: **Beaubatie, Jean, 3 rue de la Clairière les
Metz, F-78350 Jouy En Josas (FR)**
Inventeur: **Lenclos, Jean-François, 8 Résidence Val de
Seine, F-78430 Louveciennes (FR)**
Inventeur: **Cavarec, François, 10, Impasse de la Gerbe,
F-91370 Verrieres Le Buisson (FR)**
Inventeur: **Paris, Marc, 73 bis rue Edouard Vaillant,
F-95870 Bezons (FR)**

(74) Mandataire: **Mongrédien, André et al, c/o
BREVATOME 25, rue de Ponthieu, F-75008 Paris (FR)**

## Description

La présente invention concerne un système thermique de mesure de niveau de liquide comportant les caractéristiques techniques énoncées dans le préambule de la revendication 1. Elle s'applique pour mesurer le niveau relatif ou absolu d'un liquide dans des récipients tels que, par exemple, les chaudières nucléaires de production de vapeur. Un tel système est connu du document US-A-3 955 416.

La présente invention permet, notamment, la mesure en continu de ce niveau, avec un temps de réponse très court, même lorsque celui-ci varie rapidement sur des distances de plusieurs mètres, dans un environnement dont les conditions physiques (température, pression, état mono- ou bi-phasique) sont également évolutives.

Dans des récipients contenant un liquide, on a souvent besoin de connaître de façon précise la valeur du niveau de ce liquide. Ces récipients peuvent être de formes variées et constitués de matériaux divers. En outre, les liquides contenus dans ceux-ci peuvent être à une température quelconque, sous une pression également quelconque. Divers types de capteurs de mesure de niveau de liquide, à flotteurs, à tube de torsion, capacitifs, à pression différentielle, etc... sont utilisés de façon bien connue et conviennent en général dans de nombreux cas d'application. Le type du capteur à utiliser est défini en fonction des conditions de service (pression, température, corrosion, etc...) et des conditions d'installation.

Toutefois, dans le cas où les grandeurs physiques varient rapidement, les capteurs de mesure ne fournissent pas toujours la réponse rapide et précise souhaitée.

Principalement dans les chaudières nucléaires de production de vapeur, les différents matériels de mesure et particulièrement les capteurs de mesure de niveau doivent répondre aux critères énoncés ci-dessus avant et après un éventuel séisme ou une rupture du circuit primaire qui se traduit par une perte du fluide primaire. Si à l'instant d'une éventuelle rupture, le fluide primaire se vaporise dans l'enceinte de confinement, il provoque une augmentation de la pression et de la température dans ladite enceinte. Sous l'action des systèmes de sécurité et de sauvegarde sont déclenchées parallèlement des actions d'injection d'eau dans le circuit primaire et d'aspersion dans l'enceinte. On constate alors une augmentation du niveau d'eau dans l'enceinte de confinement, ainsi qu'une élévation de la pression et de la température mais également une augmentation de la radioactivité.

Cette radioactivité est, de façon connue, néfaste au bon fonctionnement des composants électroniques et à terme peut modifier les caractéristiques de ceux-ci et de fait celles du capteur de niveau d'eau.

Pour répondre aux problèmes évoqués ci-dessus, les capteurs de mesure en général et particulièrement les capteurs de niveau doivent répondre aux différents critères de qualification définis par les normalisations et réglementations en vigueur.

Une solution connue consiste à utiliser des capteurs thermiques à résistance. Le principe de fonctionnement de ces capteurs, connu en lui-même, repose sur la mesure de la valeur d'une résistance variable chauffée et immergée dans le milieu. Deux brevets illustrant cette technique de façon caractéristique seront commentés ci-après.

Dans la demande de brevet FR-A-2 219 402, sont décrits différents modes de réalisation d'un capteur à effet thermique. Dans ce capteur qui comprend une résistance de mesure et une résistance de chauffage sous gaine, la variation de température lors de son immersion dans un liquide sert à la détermination du niveau.

La chaleur dissipée par cette résistance de chauffage est transmise par convection au milieu ambiant contenu dans une enceinte. Comme cette convection est plus importante dans le milieu liquide que dans le milieu gazeux, la température moyenne dans l'environnement de la résistance de mesure sera d'autant plus faible que le niveau de liquide sera plus élevé. La valeur de la résistance de mesure étant fonction de sa température, la détermination de cette valeur donne donc une information sur le niveau du liquide contenu dans l'enceinte. Ce type de capteur résiste bien aux vibrations et également aux radiations intenses si les matériaux qui le constituent sont correctement choisis.

Malheureusement, dans ce mode de réalisation d'un capteur à effet thermique, le niveau de liquide doit être maintenu constant pendant une durée déterminée pour que l'ensemble de détection délivre une indication sûre. D'une façon générale, le système décrit dans la demande citée ci-dessus nécessite un temps de stabilisation plus ou moins important pour obtenir une température d'équilibre le long de la sonde de mesure. En outre, le coefficient d'échange thermique entre la sonde et le fluide mesuré varie avec la température propre du liquide et avec la température des vapeurs au-dessus du liquide.

L'inconvénient majeur de ce système est donc le temps nécessaire à la stabilisation de l'indication du niveau mesuré, qui correspond au temps mis par le système pour atteindre une température d'équilibre stable le long de l'élément sensible.

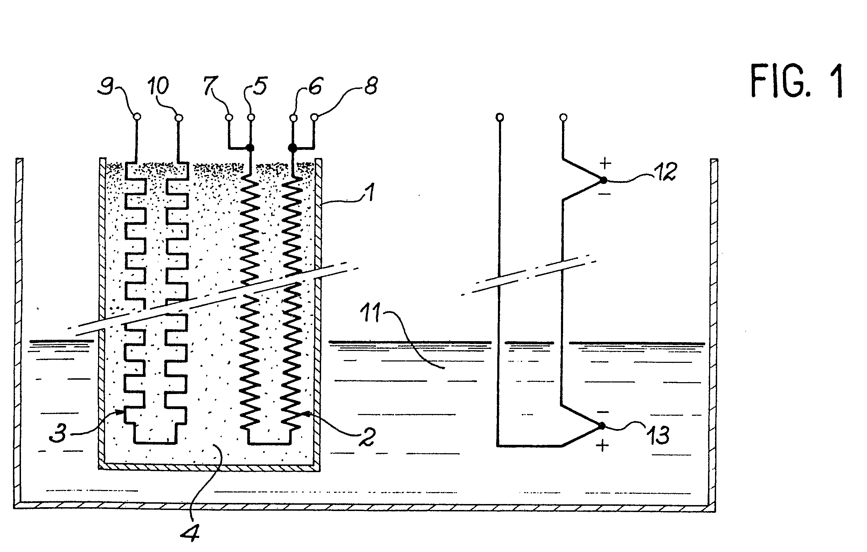

La figure 1a ci-jointe permet d'expliquer ce phénomène. Sur cette figure 1, on voit trois courbes de variations de température de l'élément sensible en ordonnées en fonction du temps en abscisses pour une élévation de chauffage de l'élément sensible à partir du temps t=0 et une valeur constante du niveau de liquide dans ce milieu.

Les courbes sont déterminées expérimentalement et correspondent respectivement aux valeurs 0%, 50% et 100% de l'échelle à mesurer, c'est-à-dire du niveau de liquide dans le récipient. Comme la mesure du niveau est fonction de la température d'équilibre autour de l'élément sensible, on voit qu'il faut un certain temps de chauffe de celui-ci pour obtenir l'indication d'une valeur de niveau fiable. Les temps de chauffe ont été déterminés expérimentalement à des valeurs de l'ordre de 10 secondes environ pour un niveau à 100% et de l'ordre de 10 minutes environ pour un niveau à 0%. Ces valeurs sont variables en fonction de la capacité calorifique de l'élément sensible qui dépend de la technologie utilisée pour la construction de celui-ci.

Ces conditions de fonctionnement sont prohibitives dans de nombreux cas et, notamment, pour les cuves de réacteurs nucléaires à eau.

Le brevet US-A-3 955 416 sus-mentionné décrit un détecteur de niveau de liquide permettant de connaître la présence ou l'absence de ce liquide au-dessus ou au-dessous d'un niveau déterminé dans un récipient.

La sonde décrite dans ce brevet comporte, associé dans un même boîtier, une résistance 20 et une thermistance 18 et utilise une source de chauffage impulsionnelle sous forme de signaux carrés. L'oscillateur qui délivre les signaux de chauffage délivre également des signaux de synchronisation en phase avec les signaux de chauffage. Après une mise en forme, ces signaux commandent les circuits électroniques appelés «portes» ou commutateurs de tension analogique. Ces portes permettent de prélever la valeur du signal de mesure à un instant donné et d'exciter une mémoire. Les valeurs des signaux pris en mémoire correspondent aux valeurs haute et basse du signal mesurés aux bornes de la résistance de mesure. La forme de ces signaux est indiquée sur les figures 2b et 2c de ce brevet. La différence d'amplitude entre les courbes 2b et 2c permet de discerner la présence ou l'absence de liquide.

Si le système analogique de détection, non décrit dans le brevet est judicieusement choisi, on peut alors détecter un seuil de niveau de liquide sans être influencé par les variations de température du liquide ou de la vapeur. Mais la construction de ce type de sonde est prévue uniquement pour une détection de niveau et ne peut pas, dans la forme indiquée dans ce brevet, être adaptée à la mesure continue d'un niveau se déplaçant sur plusieurs mètres. Il est d'ailleurs bien indiqué dans ce brevet (colonne 5, ligne 15 et suivantes) que l'on peut utiliser une pluralité de détecteurs pour surveiller une pluralité de seuils de niveaux, ce qui indique clairement que l'inventeur n'envisage pas d'autres solutions pour surveiller les déplacements d'un niveau à mesurer en continu sur une distance importante.

L'invention a précisément pour but de remédier à ces inconvénients et notamment de fournir un système thermique de mesure de niveau de liquide simple et insensible aux radiations, avec lequel on obtient des résultats de mesure sous forme d'un signal analogique précis, indépendant des températures ambiantes, avec un temps de réponse très court.

Ce résultat est obtenu grâce à une méthode de traitement de signal originale, qui permet d'indiquer, de façon fiable, la valeur d'un niveau de liquide comprise entre 0 et 100% d'échelle. Le signal traité est mesuré aux bornes d'une résistance, variable en fonction de la température, qui est chauffée. L'ensemble de la résistance de mesure et de la résistance de chauffage qui constitue la sonde à effet thermique est dans son principe connu et conforme à celui décrit par exemple dans le brevet FR-A-2 219 402. Cette sonde est constituée d'un fil pour la résistance de mesure, d'un fil pour la résistance de chauffage, l'ensemble étant entouré par une gaine métallique qui est bourrée de poudre d'alumine.

Si on utilise une telle sonde avec l'ensemble de détection du brevet US-A-3 955 416, les résultats sont quelconques, puisque le traitement du signal est conçu uniquement pour détecter un seuil de niveau. Si on utilise la sonde décrite ci-dessus avec un traitement du signal équivalent à celui décrit dans le brevet FR-A-2 219 402 en utilisant un chauffage par impulsions, le résultat est encore incertain puisque celui-ci dépend fortement des variations de température des milieux liquides et gazeux. Des essais permettent d'estimer cette incertitude à 8% pour l'indication de niveau, sur une échelle de mesure de 0% à 100% d'environ 500 mm, et à une variation de température de l'ordre de 40 °C.

Dans certains cas d'utilisation, les températures ambiantes peuvent varier dans des proportions importantes. Il est bien certain que les erreurs introduites par les variations de température sont incompatibles avec un appareil de mesure de caractère industriel.

Pour éviter les inconvénients précédents, à savoir, soit un temps de stabilisation très long avant d'avoir une indication de niveau fiable, soit une influence importante des variations de température sur l'indication de la mesure, l'invention apporte un système qui permet une mesure précise et rapide.

Selon la présente invention, l'idée originale réside dans le fait de travailler sur la pente de la composante alternative du signal de mesure qui correspond à un changement d'état du signal de chauffage de commande. Ce principe conduit à faire un changement d'état de ce signal de chauffage au moins à chaque fois que l'on veut faire une mesure.

Le signal de chauffage peut avoir plusieurs formes, sinusoïdale, aléatoire, carrée, etc... Pour des raisons de simplification de construction du système de traitement et du générateur, le signal de chauffage utilisé dans l'invention est un signal de forme carrée variant de l'état 0 à l'état 48 V continu et d'une période de l'ordre de quelques secondes pouvant varier selon l'inertie thermique de l'élément sensible.

L'invention comporte les caractéristiques techniques énoncées dans la revendication 1.

Les filtres peuvent être au nombre de deux, à savoir:
— un premier filtre extrayant la composante continue de la tension de mesure,
— un deuxième filtre donnant en sortie un signal proportionnel à l'amplitude de la composante alternative de la tension de mesure en quadrature avec le signal de commande de chauffage, les deux filtres étant commandés dans un mode de réalisation de l'invention par des signaux impulsionnels, engendrés par le module.

Selon un autre mode de réalisation, le module de calcul comprend deux circuits de calcul dont la somme des signaux de sortie délivre, à partir des deux signaux de sortie des filtres et du signal des moyens de mesure de la différence des températures du liquide et du milieu gazeux, les dérivées temporelles des estimations du niveau du liquide et de la température du liquide, ces dérivées temporelles étant intégrées dans deux intégrateurs dont les sorties sont rebouclées sur les entrées de ces circuits de calcul afin d'itérer les valeurs de la température du liquide et de niveau selon la méthode des moindres carrés.

D'autres modes de réalisation de l'invention sont contenus dans les revendications 4 à 6.

Les caractéristiques de l'invention ressortiront mieux de la description qui va suivre, donnée à titre purement illustratif et nullement limitatif, en référence aux dessins annexés, dans lesquels:

– la fig. 1a illustre les défauts de l'art antérieur,

– la fig. 1 représente schématiquement un capteur thermique utilisé dans le système de mesure de niveau selon l'invention,

– la fig. 2 représente un diagramme montrant le signal mesuré par la résistance de mesure en fonction du temps, lors d'une montée du niveau de liquide,

– la fig. 3 représente le schéma fonctionnel du circuit de traitement des signaux mesurés,

– la fig. 4 représente schématiquement le module de calcul.

Sur la fig. 1, on a représenté schématiquement un capteur thermique utilisé dans le système de mesure de niveau de liquide selon l'invention.

Dans une gaine 1, de préférence en acier inoxydable, sont disposés deux conducteurs isolés par un isolant électrique, par exemple de la poudre d'alumine.

Le premier conducteur représente une thermorésistance 2 de mesure. Celle-ci est alimentée par une source de courant continu constant, branchée aux bornes 5 et 6. La valeur de la thermorésistance 2 est fonction de la température du milieu ambiant. L'écart de potentiel aux bornes 7 et 8 sert de signal de mesure.

Le deuxième conducteur est une résistance de chauffage 3 alimentée par un amplificateur de puissance aux bornes 9 et 10.

La résistance de chauffage 3 est couplée thermiquement à la résistance de mesure 2 par l'intermédiaire d'un matériau isolant 4, par exemple de la poudre d'alumine, et l'ensemble de ces deux résistances 2 et 3 est en contact avec le milieu ambiant, dans lequel on veut mesurer le niveau de liquide 11.

On précisera également que l'élément de mesure, représenté sur la figure 1 sous forme massive pour faciliter la lisibilité du dessin est en fait réalisé sour la forme d'un câble, d'un diamètre de l'ordre d'un à deux millimètres, ayant la longueur voulue – souvent plusieurs mètres – pour se déployer verticalement selon toute l'échelle de mesure du niveau du liquide.

La température moyenne de la résistance de mesure résulte donc du bilan entre la puissance apportée par le chauffage et celle cédée au milieu ambiant par convection. Comme la convection est plus importante en milieu liquide qu'en milieu gazeux, cette température moyenne sera d'autant plus faible que le niveau de liquide sera plus élevé. La valeur de la résistance étant fonction de la température, sa détermination donnera donc une information sur le niveau de liquide dans le milieu ambiant.

Les résistances de chauffage et de mesure peuvent être réunies dans un même câble étant constitué d'une gaine en acier inoxydable. Le câble est bobiné sur un support en acier inoxydable. Cet ensemble est protégé mécaniquement par une grille métallique cylindrique.

L'utilisation de ce capteur nécessite la résolution de deux problèmes:

– la température ambiante influence la valeur de la résistance de mesure et détériore ainsi la détermination du niveau de liquide,

– la durée de la mesure est relativement longue si on attend que le système ait atteint son équilibre.

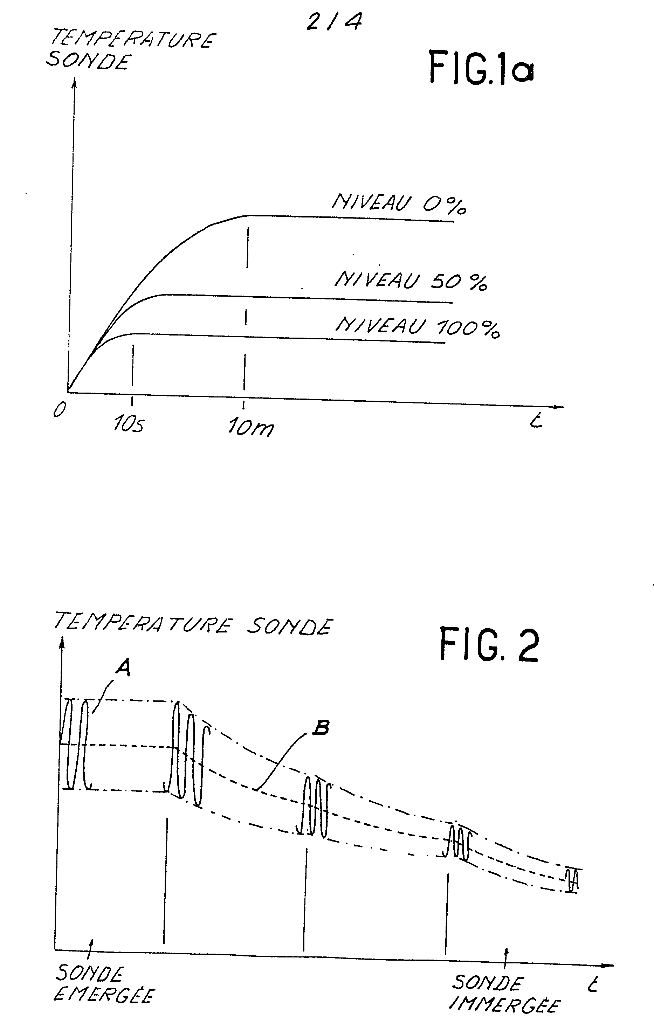

Sur la figure 2 on a représenté un diagramme montrant le signal mesuré aux bornes 7 et 8 de la résistance de mesure en fonction du temps lors d'une montée de l'interface liquide vapeur au cours de laquelle la sonde passe de l'état émergé à l'état immergé.

On emploie un chauffage pulsé qui peut être sinusoïdal, aléatoire, carré, etc... Le signal de la figure 2 est la réponse de l'élément sensible 2 aux impulsions de chauffage de la résistance 3 en fonction du niveau de liquide pour une puissance de chauffage constante. Le signal de réponse de l'élément sensible 2 peut être considéré comme la superposition de deux composantes:

– une composante alternative A qui est à la même fréquence que le signal de chauffage. L'amplitude de cette composante varie peu avec la température ambiante et dépend donc essentiellement du niveau du liquide dont elle permet la mesure,

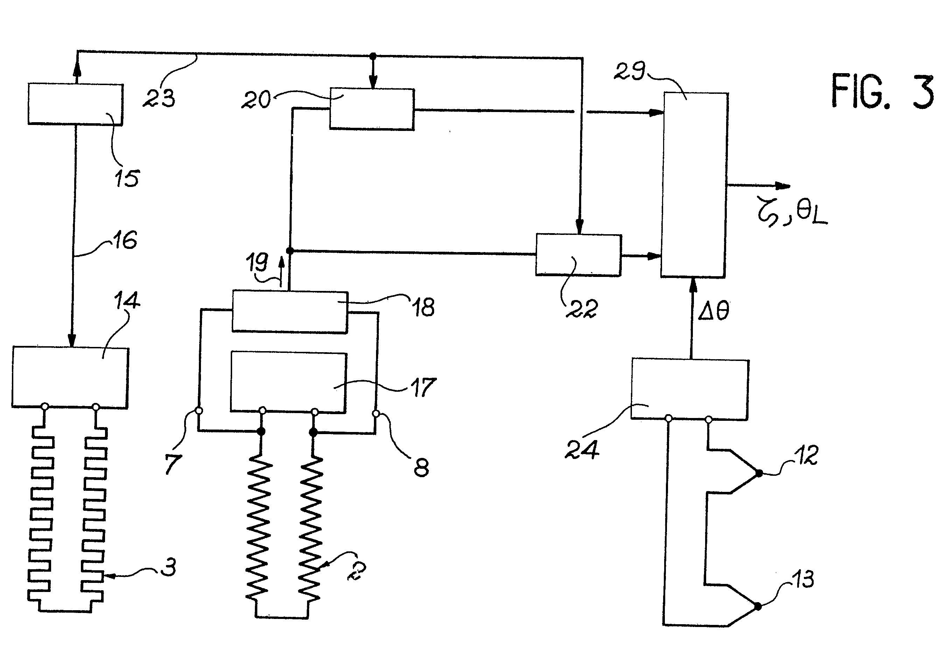

– une composante B qui est la valeur moyenne du signal précédent et qui est l'image de la température de la résistance de mesure qui varie elle-même en fonction du niveau. Les signaux électriques qui correspondent à ces deux composantes sont extraits et calculés par les filtres 20 et 22. Les signaux de sortie de ces filtres sont ensuite traités par le calculateur 29, figure 3.

La légère dépendance de la composante alternative A vis-à-vis de la température d'ambiance peut être compensée au moyen de la composante B et de la différence de température $\Delta\theta$ du milieu liquide et du milieu gazeux, se trouvant au-dessus du liquide, mesurée au moyen de deux thermocouples 12, 13 en montage différentiel, dont l'un 13 se trouve dans le liquide et l'autre 12 dans le milieu gazeux (les thermocouples 12, 13 sont représentés sur la figure 1).

Des sondes à résistance pour la mesure de température en remplacement des thermocouples, peuvent aussi bien être utilisées.

Ces sondes thermiques peuvent également être des sondes à résistance, chauffées à la même fréquence et en phase avec le signal de chauffage des capteurs à effet thermique. Dans ce cas, on déduit les températures du liquide et du milieux gazeux au-dessus du liquide des valeurs différentes du flux de chaleur dans ces deux milieux.

On dispose en effet de trois mesures (la valeur de la composante de température B, la valeur de la composante alternative A et la différence de température $\Delta\theta$ entre la phase liquide et la phase gazeuse ou les températures absolues de ces deux phases) pour déterminer les trois paramètres inconnus:
- température du liquide $\theta_L$
- température du gaz $\theta_V$, et
- niveau du liquide $\zeta$

Le schéma fonctionnel du circuit de traitement des signaux mesurés est représenté sur la figure 3. La résistance de chauffage 3 est alimentée par un amplificateur de puissance 14. La fréquence des impulsions de chauffage est définie par un module logique 15 qui pilote l'amplificateur de puissance 14 avec un signal 16.

L'élévation de la température de l'élément sensible est importante (de l'ordre de 100 °C par exemple) par rapport à celle du liquide à mesurer. Cet écart de température important permet d'améliorer la sensibilité de l'ensemble du capteur pendant les transitoires.

La résistance de mesure 2 est alimentée par une source de courant constant 17. Un circuit d'adaptation 18 mesure la tension aux bornes 7 et 8 de ladite résistance. Ce signal est proportionnel à la composante alternative A montrée sur la figure 2. Le signal mesuré 19, c'est-à-dire la tension, est appliqué à l'entrée de deux filtres 20 et 22. Le premier filtre 20 extrait la composante continue du signal mesuré. Il est constitué d'un intégrateur et d'une mémoire analogique. L'intégrateur est commandé par un signal de pilotage 23 venant du module 15. Le deuxième filtre 22 donne en sortie des signaux proportionnels à l'amplitude de la composante alternative de la tension mesurée en quadrature avec le signal de chauffage. Il est piloté aussi par le module 15, le signal de pilotage étant en quadrature avec le signal de commande 16 du chauffage.

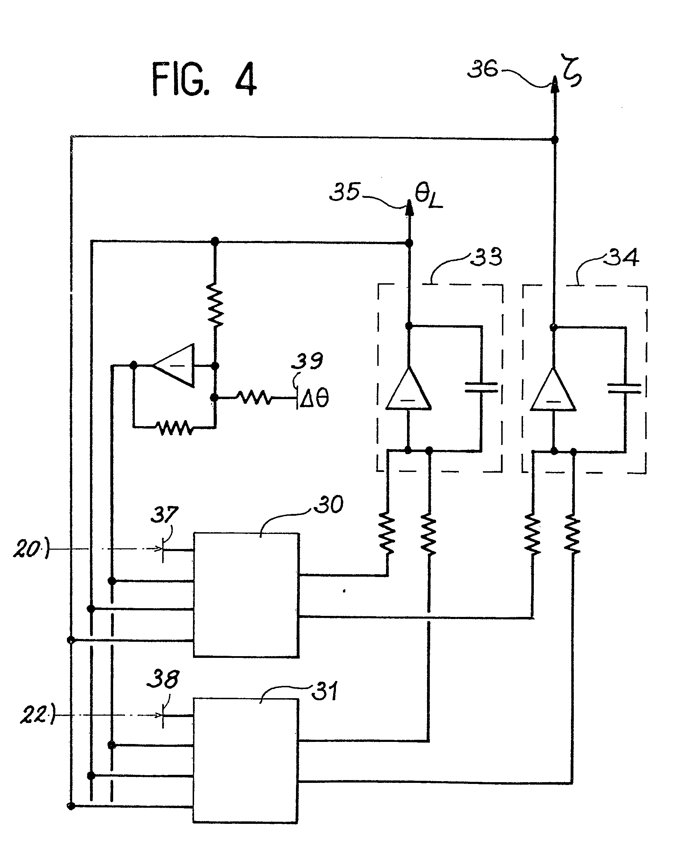

Les signaux de sortie des filtres 20 et 22 et le signal fourni par les thermocouples 12, 13 sont introduits respectivement en 37, 38 et 39 dans un module de calcul 29 représenté sur la figure 4 qui détermine la valeur du niveau de liquide $\zeta$ et les températures $\theta_L$ du liquide et $\theta_V$ de la phase gazeuse. Le calculateur 29 est réalisé à l'aide de circuits analogiques en eux-mêmes connus, dont le choix est à la portée de l'Homme de l'Art et qui, de ce fait, n'ont pas été décrits en détail. Ce calculateur 29 est notamment conçu pour élaborer un signal de niveau réduit $\zeta$ à partir de la dérivée première par rapport au temps de la composante alternative A de la figure 2; ceci permet de réduire ainsi de façon considérable, jusqu'à un temps de l'ordre de la seconde, le temps de réponse de l'ensemble de mesure et de s'affranchir du défaut majeur des systèmes antérieurs analysés dans l'introduction du présent texte. Les signaux Si délivrés par les filtres 20 et 22 ont la forme générale suivante:

$$Si = C_{Li}(\theta_L)\zeta + C_{Vi}(\theta_V)(1-\zeta); (i=0, 1, 2)$$

où $\zeta = \dfrac{n}{H}$ est le niveau de liquide réduit, n étant la hauteur de liquide à mesurer, H l'intervalle de mesure; $\theta_L$ est la température de la phase liquide; $\theta_V$ est la température de la phase vapeur $(\theta_V=\theta_L+\Delta\theta)$; $C_{Vi}$ et $C_{Li}$ sont des fonctions qui dépendent de la fréquence et de la puissance de la composante alternative (V: vapeur, L: liquide, i repère du signal $S_0$, $S_1$, $S_2$, venant des filtres 20 et 22).

Un module 24 convertit en un signal les indications fournies par les moyens 12 et 13 de repérage des températures. Ce signal est délivré au module de calcul 29.

Chacun des signaux de sortie des filtres $S_0$, $S_1$, $S_2$ représente donc en partie l'évolution du niveau du liquide à mesurer.

Selon un mode de réalisation de l'invention, la résolution de ces équations est réalisée par les deux circuits de calcul 30, 31 de la figure 4.

Une des possibilités de résolution de ces équations, qui est utilisée effectivement dans ces circuits de calcul est de minimiser les écarts $\varepsilon_i$ au sens des moindres carrés:

$$\varepsilon_i = C_{Li}(\hat{\theta}_L)\hat{\zeta} + C_{Vi}(\hat{\theta}_V)(1-\hat{\zeta})-Si$$

où $\hat{\theta}_L$ et $\hat{\zeta}$ sont des valeurs calculées à partir des mesures précédentes.

Cette méthode donne, pour les inconnues $\zeta$ et $\theta_L$ les équations d'évolution suivantes:

$$\frac{d\zeta}{dt} = -G\sum_{i=0}^{2} \varepsilon_i (C_{Li}-C_{Vi})$$

$$\frac{d\theta_L}{dt} = -G\sum_{i=0}^{2} \varepsilon_i (\zeta \frac{\delta C_{Li}}{\delta \theta_L} + (1-\zeta) \frac{\delta C_{Vi}}{\delta \theta_V})$$

où G est un gain ajusté de façon à obtenir un compromis entre la rapidité et la stabilité du circuit.

Les circuits de calcul tendent alors à réduire l'écart entre les signaux d'entrée et l'une de ces valeurs de sortie significative du niveau.

Les sorties des circuits de calcul sont intégrées par des intégrateurs 33 et 34, dont les sorties 35 et 36 donnent:
- le signal analogique de valeur du niveau de liquide $\zeta$ à la sortie 36,
- le signal analogique de valeur de la température du liquide $\theta_L$ à la sortie 35.

Le signal analogique de la valeur de la température de la phase vapeur peut être obtenu en faisant la différence entre le signal de température du liquide et le signal de différence de température délivré par les thermocouples 12, 13.

Les circuits de calcul et les filtres décrits précédemment peuvent être réalisés par des opérateurs analogiques et logiques, ou également par des opérateurs analogiques, et logiques, ou également par des moyens mumériques, câblés ou programmés.

## Revendications

1. Système thermique de mesure de niveau de liquide, comprenant un capteur à effet thermique, comportant une résistance de mesure (2) délivrant un signal de mesure, et une résistance de chauffage (3) toutes deux disposées sous gaine (1), la résistance de chauffage étant alimentée en régime impulsionnel, système dans lequel la variation de température lors de son immersion dans un liquide (11) sert à la détermination dudit niveau évalué à partir de la composante alternative du signal de mesure, cette composante étant à la même fréquence que l'alimentation de chauffage, un circuit d'adaptation (18) mesure aux bornes (7, 8) de la résistance de mesure (2) la tension représentant le signal de mesure, cette résistance étant alimentée par une source de courant constant (17), la sortie dudit circuit (18) étant reliée en parallèle aux entrées de deux filtres (20, 22), caractérisé en ce que lesdits deux filtres extraient respectivement la composante continue et la composante alternative du signal de mesure, et caractérisé en ce que ledit système comprend un module de calcul (29) dans lequel la valeur du niveau de liquide et sa température sont déterminées à partir des signaux de sortie desdits filtres (20, 22) et d'un signal fourni par des moyens (12, 13) de mesure de l'écart des températures du liquide et du milieu gazeux au-dessus du liquide, ledit module de calcul (29) étant conçu à partir de circuits analogiques connus, pour élaborer le signal de niveau du liquide à partir de la dérivée première par rapport au temps de la composante alternative du signal de mesure.

2. Système thermique de mesure selon la revendication 1, caractérisé en ce que les deux filtres (20, 22) sont commandés par des signaux impulsionnels, engendrés par un module de pilotage (15).

3. Système thermique de mesure selon la revendication 1, caractérisé en ce que le module de calcul (29) comprend deux circuits de calcul (30, 31) dont la somme des signaux de sortie délivre, à partir des deux signaux de sortie des filtres (20, 22) et du signal des moyens (12, 13) de mesure de l'écart des températures du liquide et du milieu gazeux, les dérivées temporelles des estimations du niveau du liquide et de la température du liquide, ces dérivées temporelles étant intégrées dans deux intégrateurs (33, 34) dont les sorties sont rebouclées sur les entrées de ces circuits de calcul (30, 31) afin d'itérer les valeurs de la température du liquide et de niveau selon la méthode des moindres carrés.

4. Système thermique de mesure selon la revendication 1, caractérisé en ce que les moyens de mesure (12, 13) de l'écart des températures du liquide et du milieu gazeux sont des thermocouples.

5. Système thermique de mesure selon la revendication 1, caractérisé en ce que les moyens de mesure (12, 13) de l'écart des températures du liquide et du milieu gazeux sont des sondes à résistance.

6. Système thermique de mesure selon la revendication 1, caractérisé en ce que les moyens de mesure (12, 13) de l'écart des températures du liquide et du milieu gazeux sont des sondes à résistance, celles-ci étant chauffées à la même fréquence et en phase avec le signal de chauffage du capteur à effet thermique.

## Patentansprüche

1. Thermische Vorrichtung zur Messung des Flüssigkeitsstandes mit einem thermischen Fühler, der einen ein Messignal abgebenden Messwiderstand (2) und einen Heizwiderstand (3) aufweist, die alle beide innerhalb eines Mantels (1) angeordnet sind, wobei der Heizwiderstand im Pulsbetrieb versorgt wird und bei dem System die Temperaturänderung beim Eintauchen in eine Flüssigkeit (11) zum Bestimmen des genannten Standes dient, der aufgrund der Wechselkomponente des Messignals ermittelt wird, wobei diese Komponente die gleiche Frequenz wie die Versorgung für die Heizung aufweist, einer Anpassungsschaltung (18) an den Anschlüssen (7, 8) des Messwiderstandes (2), die die das Messignal darstellende Spannung misst, wobei dieser Widerstand von einer konstanten Gleichstromquelle (17) versorgt wird und der Ausgang der genannten Schaltung (18) parallel zu den Eingängen von zwei Filtern (20, 22) verbunden ist, dadurch gekennzeichnet, dass die genannten zwei Filter jeweils die Gleichkomponente und die Wechselkomponente des Messignals herausziehen und dadurch gekennzeichnet, dass das genannte System eine Recheneinheit (29) umfasst, in der der Wert des Standes der Flüssigkeit und deren Temperatur aufgrund der Ausgangssignale der genannten Filter (20, 22) und eines Signals bestimmt werden, welches von Mitteln (12, 13) zum Messen des Temperaturunterschieds zwischen der Flüssigkeit und dem gasförmigen Medium oberhalb der Flüssigkeit geliefert wird, wobei die genannte Recheneinheit (29) ausgehend von bekannten Analogschaltkreisen entworfen ist, um das Signal des Flüssigkeitstands aufgrund der ersten Zeitableitung der Wechselkomponente des Messignals zu schaffen.

2. Thermische Vorrichtung zur Messung nach Anspruch 1, dadurch gekennzeichnet, dass die zwei Filter (20, 22) von von einem Steuermodul (15) erzeugten Impulssignalen gesteuert sind.

3. Thermische Vorrichtung zur Messung nach Anspruch 1, dadurch gekennzeichnet, dass die Recheneinheit (29) zwei Rechenschaltkreise (30, 31) aufweist, deren Ausgangssignalsumme auf der Grundlage der zwei Ausgangssignale der Filter (20, 22) und des Signals der Mittel (12, 13) zum Messen des Temperaturunterschieds zwischen der Flüssigkeit und dem gasförmigen Milieu, die Zeitableitungen von Schätzwerten des Flüssigkeitsstands und der Flüssigkeitstemperatur liefert, diese Zeitableitungen in zwei Integratoren (33, 34) integriert werden, deren Ausgänge auf diese Rechenschaltkreise (30, 31) rückgekoppelt sind, um die Werte für die Temperatur der Flüssigkeit und deren Stand nach dem Verfahren der kleinsten Quadrate zu iterieren.

4. Thermische Vorrichtung zur Messung nach Anspruch 1, dadurch gekennzeichnet, dass die Mittel (12, 13) zum Messen des Temperaturunterschiedes der Flüssigkeit und des gasförmigen Mediums Thermoelemente sind.

5. Thermisches System nach Anspruch 1, dadurch gekennzeichnet, dass die Mittel (12, 13) zum Messen des Temperaturunterschiedes der Flüssigkeit und des gasförmigen Mediums Widerstandsfühler sind.

6. Thermisches System zur Messung nach Anspruch 1, dadurch gekennzeichnet, dass die Mittel (12, 13) zum Messen des Temperaturunterschieds der Flüssigkeit und des gasförmigen Mediums Widerstandsfühler sind, die mit derselben Frequenz und Phase wie das Signal zum Heizen des thermischen Fühlers geheizt werden.


**Claims**

1. Thermal system for measuring the liquid level comprising a heat sensor with a measuring resistor (2) supplying a measuring signal and a heating resistor (3), both being sheathed (1), the heating resistor being supplied in the pulse mode, whereby in said system the temperature variation during its immersion in a liquid (11) is used for determining said level evaluated on the basis of the a.c. component of the measuring signal, said component being at the same frequency as the heating supply, a matching circuit (18) measuring at the terminals (7, 8) of measuring resistor (2) the voltage representing the measuring signal, said resistor being supplied by a constant current source (17), the output of said circuit (18) being connected in parallel to the inputs of two filters (20, 22), characterized in that the said two filters respectively extract the d.c. component and the a.c. component of the measuring signal and characterized in that said system comprises a computing module (29), in which the value of the level of the liquid and its temperature are determined on the basis of output signals from filters (20, 22) and a signal supplied by the means (12, 13) for measuring the variation of the temperatures of the liquid and gaseous medium above the liquid, said computing module (29) being designed on the basis of known analog circuits in order to process the liquid level signal on the basis of the first derivative with respect to the time of the a.c. component of the measuring signal.

2. Thermal measuring system according to claim 1, characterized in that the two filters (20, 22) are controlled by pulse signals produced by a control module (15).

3. Thermal measuring system according to claim 1, characterized in that the computing module (29) comprises two computing circuits (30, 31), whereof the sum of the output signals supplies, on the basis of two output signals of the filters (20, 22) and the signal from the means (12, 13) for measuring the temperature difference of the liquid and the gaseous medium, the time derivatives of the estimates of the liquid level and the liquid temperature, said time derivatives being integrated into two integrators (33, 34), whose outputs are relooped onto the inputs of said computing circuit in order to iterate the values of the liquid temperature and level in accordance with the method of least squares.

4. Thermal measuring system according to claim 1, characterized in that the means (12, 13) for measuring the temperature difference of the liquid and the gaseous medium are thermocouples.

5. Thermal measuring system according to claim 1, characterized in that the means (12, 13) for measuring the temperature difference of the liquid and the gaseous medium are resistance probes.

6. Thermal measuring system according to claim 1, characterized in that the means (12, 13) for measuring the temperature difference of the liquid and the gaseous medium are resistance probes, which are heated to the same frequency and are in phase with the heating signal of the heat sensor.

FIG. 1

0 144 253

2 / 4

TEMPERATURE SONDE

FIG.1a

NIVEAU 0%

NIVEAU 50%

NIVEAU 100%

0

10s

10m

t

TEMPERATURE SONDE

FIG. 2

A

B

SONDE
EMERGÉE

SONDE
IMMERGÉE

t

11

FIG. 3

$\zeta, \theta_L$

$\Delta\theta$

3/4

0 144 253

FIG. 4